# EUROPEAN PATENT APPLICATION

(11) **EP 4 752 661 A2**
(43) Date of publication of application: **03.06.2026**
(21) Application number: 25218762.0
(22) Date of filing: 26.11.2025
(51) Int. Cl.: G05D 1/225, G01C 21/00, G05D 1/249, G06Q 50/00, G08G 1/00, G05D 105/00, G05D 107/30, G05D 109/10

(54) **SYSTEM AND METHOD FOR MANAGING OPERATIONS OF A CRAWLER VEHICLE IN A WORKING AREA**

(30) Priority: 29.11.2024 IT 202400027078; 18.12.2024 IT 202400028929; 06.02.2025 IT 202500002259
(71) Applicant: PRINOTH S.p.A., 39049 Vipiteno (BZ) (IT)
(72) Inventor: KIRCHMAIR, Martin, 39049 VIPITENO (BZ) (IT); PAOLETTI, Alberto, 39049 VIPITENO (BZ) (IT); SALIS, Francesco, 39049 VIPITENO (BZ) (IT)
(74) Representative: Studio Torta S.p.A.

(57) **Abstract**

A system for managing operations of a crawler vehicle in a working area has a crawler vehicle (2), which is configured to advance in the working area (3) and comprises a working tool assembly (6) and a control unit (7); at least one detection device (8), which is configured to detect operative data indicative of a status of the working area (3) and is separate from the crawler vehicle (2); and a processing device (9) configured to process the operative data detected by the at least one detection device (8), the control unit (7) of the crawler vehicle (2) being configured to perform at least one of the following actions: send information indicative of the processed operative data to an interface screen (10); control the advancement of the crawler vehicle (2) in the working area (3) as a function of the processed operative data; control the working tool assembly (6) as a function of the processed operative data.

## Description

### CROSS-REFERENCE TO RELATED APPLICATIONS

This patent application claims priority from Italian patent applications no. 102024000027078 filed on November 29, 2024, no. 102024000028929 filed on December 18, 2024, and no. 102025000002259 filed on February 6, 2025, the entire disclosure of which is incorporated herein by reference.

### TECHNICAL SECTOR

The present invention relates to a system and method for managing operations of a crawler vehicle in a working area.

### BACKGROUND OF THE INVENTION

Generally, a crawler type vehicle comprises a frame, a driver's cab, a propulsion system, a pair of motorised tracks, and possibly working tools.

As is known, the crawler vehicles are commonly used in an off-road working area in order to carry out a wide range of different jobs, such as preparing the snowpack of ski runs or cleaning beaches or for operations in agriculture.

Generally, the status of the working area in which the crawler vehicle operates may vary depending on the climatic-environmental conditions and/or the activities taking place in the working area. By way of example, the topographical conformation of the working area may vary depending on the season and the presence of obstacles/people in the working area is typically unpredictable in advance.

Currently, the management of the operations of one or more crawler vehicles in a working area is entrusted to the experience of the operators, who have a poorly updated knowledge on the status of the entire working area. As a result, the management of the operations of crawler vehicles in the working area is not optimal.

### OBJECT OF THE INVENTION

An aim of the present invention is to provide a system for managing operations of a crawler vehicle in a working area that mitigates the drawbacks of the prior art disclosed herein.

In accordance with the present invention a system for managing operations of a crawler vehicle in a working area is realized, the system comprising:
- a crawler vehicle, which is configured to advance in the working area and comprises a frame, a pair of motorised tracks, a working tool assembly, and a control unit;
- at least one detection device, which is configured to detect operative data indicative of a status of the working area and is separate from the crawler vehicle; and
- a processing device, which is in communication with the control unit of the crawler vehicle and with the at least one detection device, and is configured to process the operative data detected by the at least one detection device and to transmit said processed operative data to the control unit of the crawler vehicle;
the control unit of the crawler vehicle being configured to perform at least one of the following actions:
- sending information indicative of the processed operative data to an interface screen so as to allow a display of said information on the interface screen;
- controlling the advancement of the crawler vehicle in the working area as a function of the processed operative data;
- controlling the working tool assembly as a function of the processed operative data.

Thanks to the present invention, it is possible to obtain information on the status of the working area, even at portions of the working area that are inaccessible or out of reach of the crawler vehicle, and to manage the operations of the crawler vehicle in the working area accordingly. In this way, it is possible to optimize the management of the resources and processing times in the working area.

By way of example, thanks to the at least one detection device, it is possible to detect in real time the topographical conformation of the entire area in order to assign to the crawler vehicle activities and/or missions to be carried out as a function of the detected topographical conformation or provide updated information to the operator of the crawler vehicle.

Furthermore, thanks to the present invention, it is possible to optimally manage a fleet of crawler vehicles, assigning to each crawler vehicle a certain sequence of operations to be carried out in a certain zone of competence of the working area.

In accordance with one embodiment, the system comprises at least one recognition vehicle of aerial and/or ground type, which is configured to advance in the working area and is equipped with the at least one detection device.

In this way, it is possible to detect operative data indicative of a status of the working area from above and/or on the ground from a perspective out of reach of the crawler vehicle.

In accordance with a further embodiment, the system comprises at least one artificial satellite, which is configured to orbit around the planet Earth and is equipped with the at least one detection device.

In this way, it is possible to detect operative data indicative of a status of the entire working area from an aerial perspective.

In accordance with a further embodiment, the at least one detection device is arranged in a fixed location in the working area or at boundaries of the working area.

In this way, it is possible to detect operative data indicative of a status of the working area at specific points of interest of the working area and compare the operative data detected at different time points.

In particular, the processing device is arranged in a position remote from the crawler vehicle and the at least one detection device.

In this way, it is possible to control the management of the system from a remote location, such as a valley station of a ski resort.

In particular, the system comprises a plurality of crawler vehicles.

In this way, each crawler vehicle can be independently controlled to perform a plurality of different tasks in different areas of the working area.

In particular, the processing device is configured to process the operative data detected by the at least one detection device so as to determine in real time a status of at least a portion of the working area.

In this way, it is possible to obtain real-time updated information on the status of the working area. By way of example, it is possible to detect in real time the presence of objects or people in the working area and/or detect the conformation of zones of the working area that represent blind spots for the crawler vehicle.

In particular, the processing device is configured to process the operative data detected by the at least one detection device so as to determine a topographical conformation of the working area.

In this way, it is possible to detect the topographical conformation of the working area at different time instants and compare the detected topographical conformations with each other.

By way of example, it is possible to detect the topographical conformation of the working area in different seasons. In addition or alternatively, it is possible to detect the topographical conformation of the working area before and after working of the working area by the crawler vehicle. In this way, it is possible to define a reference surface, a current surface and a target surface in the working area.

In particular, the processing device is configured to process the operative data detected by the at least one detection device so as to detect a position and/or a conformation of reference elements in the working area.

In this way, it is possible to avoid any obstacles along the path of the crawler vehicle and/or simplify the control of the crawler vehicle so as to allow the crawler vehicle to be driven even by a driver with little experience. In addition, it is possible to control the advancement of the crawler vehicle even remotely, without the need to keep the driver aboard the crawler vehicle.

A further aim of the present invention is to realize a method for managing operations of a crawler vehicle in a working area that mitigates the drawbacks of the prior art disclosed herein.

In accordance with the present invention a method for managing operations of a crawler vehicle in a working area is realized, the method comprising the steps of:
- detecting operative data indicative of a status of the working area by means of at least one detection device separate from the crawler vehicle;
- processing the detected operative data; and
- performing at least one of the following actions:
   - sending information indicative of the processed operative data to an interface screen so as to allow a display of said information on the interface screen;
   - controlling the advancement of the crawler vehicle in the working area as a function of the processed operative data;
   - controlling the working tool assembly of the crawler vehicle as a function of the processed operative data.

Thanks to this method, it is possible to obtain updated information on the status of the working area and, consequently, optimally manage the operations carried out by the crawler vehicle taking into account this information.

### BRIEF DESCRIPTION OF THE DRAWINGS

Further characteristics and advantages of the present invention will become clear from the following description of non-limiting examples of embodiment thereof, with reference to the figures of the attached drawings, wherein:
- Figure 1 is a view, with parts removed for clarity and schematised parts, of a system for managing operations of a crawler vehicle in a working area realized in accordance with the present invention;
- Figure 2 is a side view, with schematised parts and parts removed for clarity, of a crawler vehicle of the system of Figure 1; and
- Figure 3 is a flowchart of a method for managing operations of the crawler vehicle of Figure 2 in a working area.

### DETAILED DESCRIPTION OF THE FIGURES

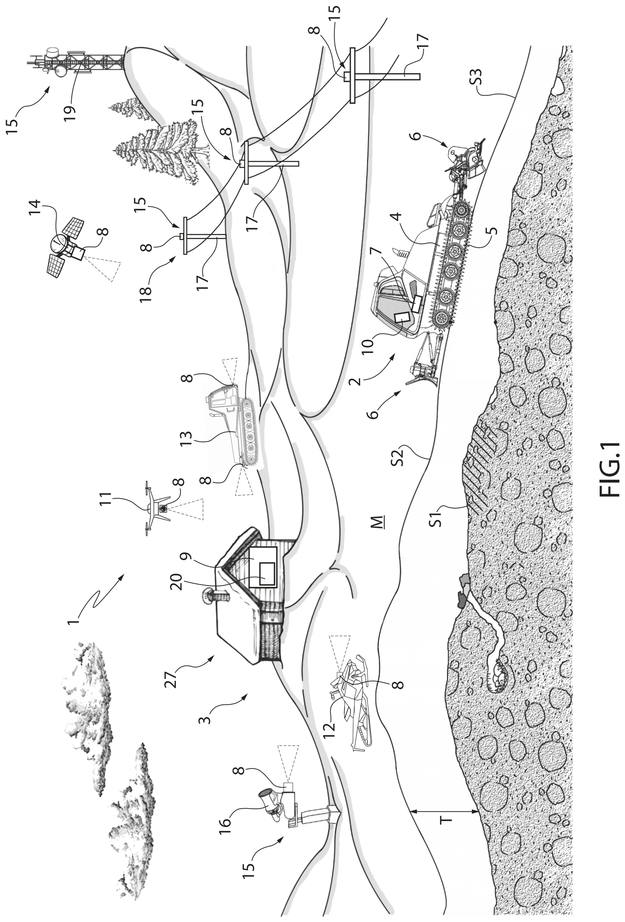

With reference to Figure 1, number 1 denotes as a whole a system for managing operations of a crawler vehicle 2 in a working area 3, preferably off-road.

In the non-limiting embodiment of the present invention described and shown herein, the working area 3 comprises a snowpack M of ski runs and the crawler vehicle 2 is used for preparing said snowpack M. In particular, the crawled vehicle 2 is a snow groomer.

In more detail, the crawler vehicle 2 is used for preparing downhill ski runs, and/or cross-country ski runs, and/or ski-jumping ramps, and/or half-pipe ski runs, and/or snow-parks, and/or snowmobile tracks.

In accordance with a further embodiment, the working area 3 can be a sandy area, such as a beach, and the crawler vehicle 2 can be used for the maintenance of said sandy area. In addition or alternatively, the working area 3 can be an agricultural field and the crawler vehicle 2 can be used for operations in the agricultural field, such as harvesting and/or handling of agricultural products and/or forage silage and/or bagasse harvesting and/or handling.

In addition, in accordance with a further embodiment not shown in the accompanying figures, the crawler vehicle 2 can comprise a shredder preferably positioned at the front of the crawler vehicle 2 and can be used for shredding vegetation.

In accordance with the present invention, the system 1 comprises the crawler vehicle 2, which is configured to advance in the working area 3 and comprises a frame 4, a pair of motorised tracks 5 (only one of which is visible in Figure 1), a working tool assembly 6, and a control unit 7.

Furthermore, the system 1 comprises at least one detection device 8, which is configured to detect operative data indicative of a status of the working area 3 and is separate from the crawler vehicle 2; and a processing device 9, which is in communication with the control unit 7 of the crawler vehicle 2 and with the at least one detection device 8, and is configured to process the operative data detected by the at least one detection device 8 and transmit said processed operative data to the control unit 7 of the crawler vehicle 2.

The control unit 7 of the crawler vehicle 2 is configured to perform at least one of the following actions:
- sending information indicative of the processed operative data to an interface screen 10 so as to allow a display of said information on the interface screen 10;
- controlling the advancement of the crawler vehicle 2 in the working area 3 as a function of the processed operative data;
- controlling the working tool assembly 6 as a function of the processed operative data.

In particular, the status of the working area 3 comprises the topographical conformation of the working area 3 and/or the presence of people or objects, such as any obstacles, in the working area 3. In more detail, the topographic conformation of the working area 3 comprises, for example, the thickness or any irregularities of the snowpack M.

In the non-limiting embodiment of the present invention described and shown herein, the system 1 comprises a plurality of crawler vehicles 2, preferably a fleet of crawler vehicles 2.

Furthermore, the system 1 comprises a plurality of detection devices 8. In particular, each detection device 8 comprises a lidar and/or a radar and/or an infrared video camera and/or a stereoscopic camera and/or a camera and/or a video camera preferably at 270° or 360°.

In accordance with a variant of the present invention, each detection device 8 comprises a thermographic camera configured to acquire thermographic images and/or thermographic videos of the environment surrounding the crawler vehicle 2.

In one embodiment, each detection device 8 comprising a thermographic camera allows one or more of the following to be detected: snow temperature(s); snow humidity; air temperature(s); air humidity; snowpack profile M thanks to the temperature difference between snowpack M and air; distinguishing a worked surface of snowpack M from an unworked surface of snowpack M. The use of the thermographic camera is particularly useful in conditions of poor visibility, such as at night or in foggy conditions.

In accordance with one embodiment, the detection device 8 is not arranged aboard the crawler vehicle 2.

In accordance with the embodiment shown in Figure 1, the system 1 comprises at least one recognition vehicle 11, 12, 13 of the aerial and/or ground type, which is configured to advance in the working area 3 and is equipped with the detection device 8. In other words, the detection device 8 is arranged aboard said recognition vehicle 11, 12, 13.

In more detail, the detection device 8 is facing in a travelling direction of the recognition vehicle 11, 12, 13 or in a direction substantially opposite to the travelling direction or in a direction transverse to the travelling direction.

In particular, the recognition vehicle 11 is an unmanned aerial vehicle, preferably an aerial drone, configured to detect from above operative data indicative of a status of the working area 3 by means of the detection device 8. The recognition vehicle 12 is a snowmobile configured to detect from the ground operative data indicative of a status of the working area 3 via the detection device 8. The recognition vehicle 13 is a further crawler vehicle equipped with the detection device 8 for detecting from the ground operative data indicative of a status of the working area 3.

Furthermore, the system 1 comprises at least one artificial satellite 14, which is configured to orbit around the planet Earth and is equipped with the detection device 8. In other words, the detection device 8 is arranged aboard the artificial satellite 14.

In particular, some of the detection devices 8 may be arranged in respective fixed stations 15 in the working area 3 and/or at boundaries of the working area 3. In the non-limiting embodiment of the present invention described and shown herein, the system 1 comprises a snow generator 16, such as for example a snow cannon or lance, on which the detection device 8 is mounted; and/or a support pylon 17 for a rope transport system 18 on which the detection device 8 is mounted; and/or a telecommunications tower 19 on which the detection device 8 is mounted.

It is understood that the detection devices 8 are not necessarily arranged aboard all the recognition vehicles 11, 12, 13, of the artificial satellite 14, and mounted on all the fixed stations 15 mentioned above. For example, the system 1 may comprise a single detection device 8 arranged aboard one of the recognition vehicles 11, 12, 13 and the artificial satellite 14 or arranged in one of the fixed stations 15.

In accordance with one embodiment, the processing device 9 is arranged in a position remote from the crawler vehicle 2 and the detection devices 8. In the embodiment described and shown herein, the processing device 9 is arranged in a remote control station 27, such as a valley station of a ski resort.

In accordance with an alternative embodiment, not shown in the accompanying figures, the processing device 9 is arranged aboard the crawler vehicle 2.

In particular, the processing device 9 is equipped with wireless communication modules and is configured to receive operative data from the detection device 8 and the control unit 7 of the crawler vehicle 2, to process said received operative data, and to send control signals to the control unit 7 so as to control the crawler vehicle 2 as a function of the processed operative data.

In particular, the processing device 9 comprises a CPU (Central Processing Unit) and implements artificial intelligence algorithms.

In more detail, the processing device 9 is configured to process the operative data detected by the detection devices 8 so as to determine in real time a status of at least a portion of the working area 3. For example, the processing device 9 is configured to process videos and/or images detected by one of the detection devices 8 so as to monitor in real time a presence of people or objects in the working area 3 or provide a view of the working area 3 from a perspective other than the perspective of the crawler vehicle 2 to prevent blind spots. In the event that the working area 3 comprises a ski resort, the processing device 9 is configured to process videos and/or images detected by one of the detection devices 8 so as to monitor a presence of skiers or obstacles on the ski runs.

In addition, the processing device 9 is configured to process the operative data detected by the detection devices 8 so as to determine a topographical conformation of the working area 3. In particular, the processing device 9 is configured to determine the topographical conformation of the working area 3 at different time instants and compare the detected topographical conformations with each other.

By way of example, in the event that the working area 3 comprises a ski resort, the processing device 9 is configured to determine a reference surface S1, where the working area 3 is free of snow. Preferably, the processing device 9 is configured to determine the reference surface S1 by processing the operative data detected by the detection device 8 during a hot season, such as the boreal summer.

The processing device 9 is further configured to determine a current surface S2, in which the working area 3 is covered by the snowpack M. Preferably, the processing device 9 is configured to determine the current surface S2 by processing the operative data detected by the detection device 8 during a cold season, such as the boreal winter.

In accordance with one embodiment, the processing device 9 is configured to calculate a thickness T of the snowpack M in the working area 3 as a function of the determined reference surface S1 and the determined current surface S2. In particular, the processing device 9 is configured to determine the thickness T of the snowpack M at each point of the working area 3 by calculating a difference between an altitude HS2 at a given point of the current surface S2 and an altitude HS1 at a corresponding point of the reference surface S1. In other words: T = HS2 - HS1.

In other words, the processing device 9 is configured to determine the thickness T of the snowpack M also at a point of the working area 3 outside the range and/or field of view of the crawler vehicle 2, preferably before the crawler vehicle 2 travels along said point of the working area 3.

Furthermore, the processing device 9 is configured to determine a target surface S3 as a function of the determined reference surface S1 and the determined current surface S2. In more detail, the processing device 9 is configured to determine the target surface S3 as a function of the determined thickness T of the snowpack M. The term "target surface S3" means a surface of the snowpack M that is desired to be obtained following a processing of the snowpack M by the working tool assembly 6 of the crawler vehicle 2.

In accordance with a non-limiting embodiment of the present invention, the processing device 9 comprises a memory 20, in which the determined reference surface S1 and/or the determined current surface S2 and/or the determined target surface S3 and/or the thickness T of the snowpack M are stored. In particular, the memory 20 is configured to contain a first three-dimensional model of the determined reference surface S1 and/or a second three-dimensional model of the determined current surface S2 and/or a third three-dimensional model of the determined target surface S3 and/or a fourth three-dimensional model of the thickness T of the snowpack M.

In addition or alternatively, the target surface S3 may be stored a priori in the memory 20, preferably without being determined by the processing device 9 as a function of the reference surface S1 and the current surface S2.

In accordance with one embodiment, the processing device 9 is configured to process the operative data detected by the detection devices 8 so as to assign tasks and/or missions to each crawler vehicle 2. In particular, the processing device 9 is configured to assign said tasks and/or missions to each crawler vehicle 2 as a function of the determined topographical conformation of the working area 3 and/or of the status determined in real-time of the working area 3.

By way of example, the processing device 9 is configured to assign a surface working activity of a first zone of the working area 3 to one of the crawler vehicles 2 and to assign to a further crawler vehicle 2 a rescue mission to be carried out in a second zone of the working area 3. In more detail, in the event that the working area 3 comprises a ski resort, the processing device 9 is configured to assign to one of the crawler vehicles 2 a snowpack processing activity M of the first zone of the working area 3 and to assign to a further crawler vehicle 2 a rescue mission to rescue a skier to be carried out in a second zone of the working area 3.

Furthermore, the processing device 9 is configured to process the operative data detected by the detection device 8 so as to identify a position and/or a conformation of reference elements in the working area 3. In particular, the processing device 9 is configured to identify a position of objects and/or living beings in the working area 3 as a function of said processed operative data. By way of example, the reference elements may comprise buildings or poles or snow generators or people or snow groomers or snowmobiles.

In more detail, the memory 20 of the processing device 9 is configured to store a database containing comparison images of a plurality of reference elements of different types. The processing device 9 is configured to classify each reference element as a function of the processed operative data and the comparison images stored in the database.

By way of example, the processing device 9 is configured to classify each reference element as an obstacle or as a boundary element delimiting an area that can be travelled by the crawler vehicle 2 or as a component of the crawler vehicle 2, for example as a working tool 6 of the crawler vehicle 2.

In particular, the artificial intelligence algorithms implemented by the processing device 9 employ pre-trained convolutional neural networks for the detection and classification of the reference elements. In accordance with a non-limiting embodiment of the present invention, said artificial intelligence algorithms comprise object detection models, such as the "YOLO - (You Only Look Once)" model.

In addition, the processing device 9 is configured to calculate a distance of each identified reference element from the crawler vehicle 2 as a function of the processed operative data. By way of example, the processing device 9 implements a "Monocular Depth Estimation" type algorithm, which is configured to estimate the distance of reference elements by receiving images and/or videos detected by a single camera as input.

In addition, the processing device 9 is configured to define an area that can be travelled by the crawler vehicle 2 as a function of the identified position and/or the identified conformation of the reference elements and to plan an optimal advancement path within the area that can be travelled by the crawler vehicle 2, so as to avoid collisions with any reference elements classified as obstacles.

In particular, the processing device 9 is configured to process in real time a sequence of digital images of the working area 3 as a function of the operative data detected by the detection device 8. In more detail, the processing device 9 is configured to detect and/or indicate the contours of each reference element in the sequence of processed digital images.

By way of example, the artificial intelligence algorithms implemented by the processing device 9 comprise deep learning models, such as a "Semantic Segmentation" type model, which associate a category with each unitary element, preferably each pixel, of the digital image processed in order to group similar unitary elements in the same category.

From the operational point of view, the processing device 9 is configured to send said processed operative data to the control unit 7 of the crawler vehicle 2. In particular, said sent operative data are indicative of a real-time status of at least a portion of the working area 3 and/or of a topographical conformation of the working area 3 and/or of activities and/or missions to be assigned to the crawler vehicle 2 and/or of a position and/or conformation of reference elements in the working area 3.

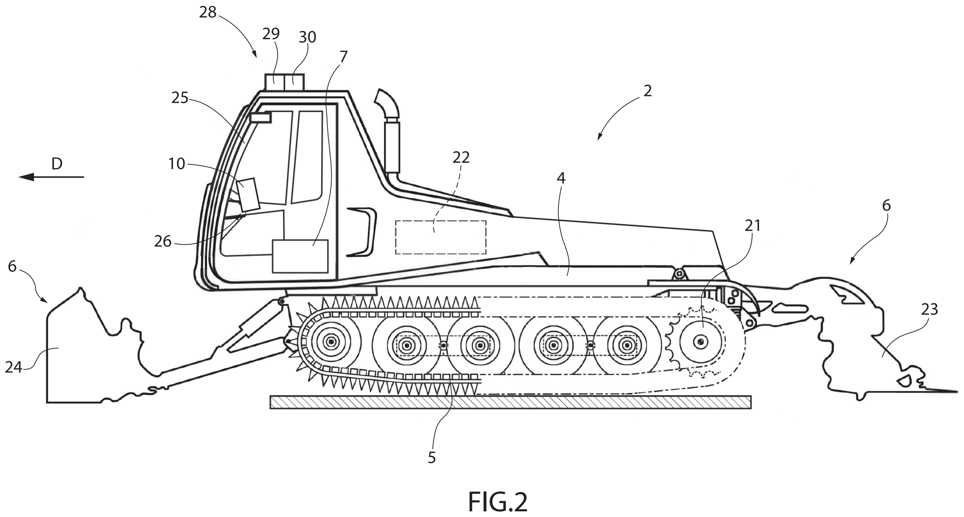

With reference to Figure 2, the crawler vehicle 2 comprises a pair of drive wheels 21 (only one of which is visible in Figure 2), each of which is coupled to a respective track 5; and a propulsion system 22, for example internal combustion or electric or hydrogen-powered, configured to transmit power to the drive wheels 21.

In the non-limiting embodiment of the present invention described and shown herein, the working tool assembly 6 comprises at least one working tool 6 movably connected to the frame 4. In particular, the working tool assembly 6 comprises a tiller 23, a shovel 24, and a winch not shown in the accompanying figures. It is understood that the crawler vehicle 2 does not necessarily comprise all the working tools 6 mentioned above. For example, the crawler vehicle 2 may comprise any one or two of the working tools 6 selected from the tiller 23, the shovel 24 and the winch.

Furthermore, in the non-limiting embodiment of the present invention described and shown herein, the crawler vehicle 2 comprises a cab 25 mounted on the frame 4 and a user interface 26, which is arranged in the cab 25 and is provided with the interface screen 10 configured to receive from the control unit 7 the information indicative of the operative data processed by the processing device 9. In accordance with an embodiment not shown in the accompanying figures, the user interface 26 comprises a plurality of interface screens 10.

In accordance with an alternative embodiment, not shown in the accompanying figures, the crawler vehicle 2 is without a cab and the user interface 26 is arranged at a remote location, such as for example the remote control station 27 (Figure 1).

In particular, the crawler vehicle 2 comprises a sensor assembly 28, which is in communication with the control unit 7 and is configured to detect further operative data comprising operational parameters of the crawler vehicle 2 and/or information about the operations to be performed and/or about the characteristics of the environment surrounding the crawler vehicle 2.

In particular, the sensor assembly 28 comprises an acquisition device 29, such as for example a lidar and/or a radar and/or an infrared video camera and/or a stereoscopic camera and/or a camera and/or a video camera preferably at 270° or 360°, configured to detect operative data on the environment surrounding the crawler vehicle 2 and/or a satellite navigation device 30, for example a GNSS ("Global Navigation Satellite System") type device, which is configured to detect the position and three-dimensional orientation of the crawler vehicle 2. In more detail, the acquisition device 29 is facing in a travelling direction D of the crawler vehicle 2 or in a direction substantially opposite to the travelling direction D or in a direction transverse to the travelling direction D.

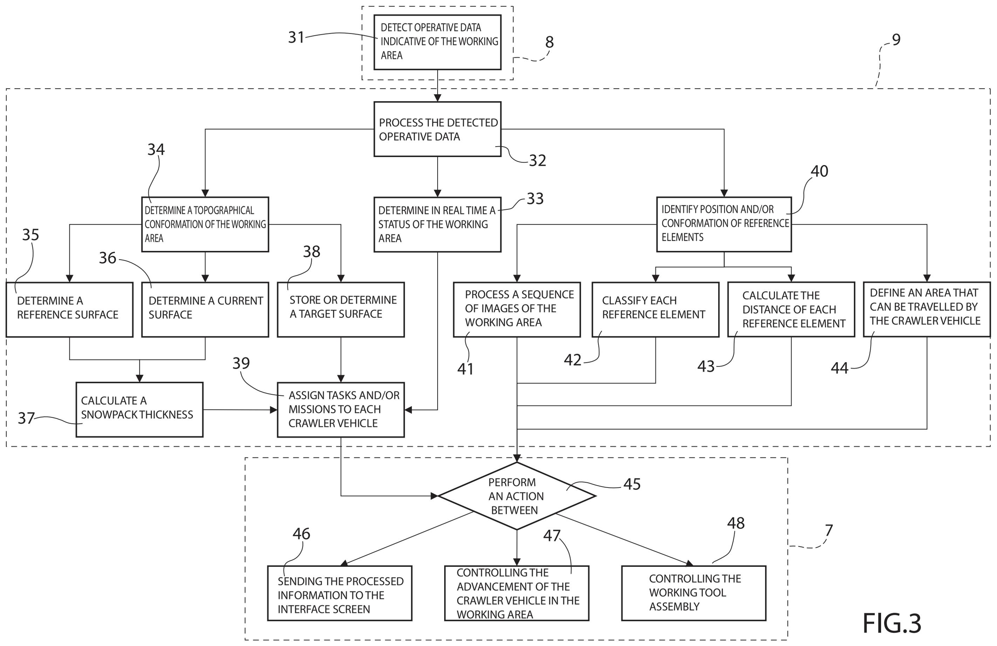

In use and with reference to Figure 3, the detection devices 8 detect operative data indicative of a status of the working area 3 and transmit said detected operative data to the processing device 9 (block 31).

The processing device 9 receives the operative data detected by the detection devices 8 processes said received operative data (block 32).

In particular, the processing device 9 determines in real time a status of at least a portion of the working area 3 (block 33). For example, the processing device 9 processes videos and/or images detected by one of the detection devices 8 so as to monitor in real time a presence of people or objects in the working area 3.

Furthermore, the processing device 9 determines a topographical conformation of the working area 3 (block 34). In particular, the processing device 9 determines the topographical conformation of the working area 3 at different time instants and compares the detected topographical conformations with each other.

In more detail, in the event that the working area 3 comprises a ski resort, the processing device 9 determines a reference surface S1 (block 35), where the working area 3 is free of snow, and a current surface S2 (block 36), where the working area 3 is covered by the snowpack M. At this point, the processing device 9 calculates a thickness T of the snowpack M in the working area 3 as a function of the determined reference surface S1 and the determined current surface S2 (block 37).

Furthermore, the processing device 9 a priori stores a target surface S3 or determines said target surface S3 as a function of the determined reference surface S1 and the determined current surface S2 (block 38).

At this point, the processing device 9 assigns tasks and/or missions to each crawler vehicle 2 as a function of the determined topographical conformation of the working area 3 and/or the determined real-time status of the working area 3 (block 39). In particular, the processing device 9 assigns tasks and/or missions to each crawler vehicle 2 as a function of the calculated thickness T of the snowpack and/or the stored or determined target surface S3.

In addition or alternatively, the processing device 9 identifies a position and/or a conformation of reference elements in the working area 3 (block 40). In particular, the processing device 9 identifies a position of objects and/or living beings in the working area 3 as a function of the processed operative data.

In more detail, the processing device 9 processes in real time a sequence of digital images of the working area 3 (block 41) and/or classifies each reference element as a function of the comparison images stored in the database (block 42) and/or calculates a distance of each reference element identified by the crawler vehicle 2 as a function of the identified position of the reference elements (block 43) and/or defines an area that can be travelled by the crawler vehicle 2 as a function of the identified position and/or the identified conformation of the reference elements (block 44).

The processing device 9 sends to the control unit 7 of the crawler vehicle 2 said processed operative data indicative of the real-time status of at least a portion of the working area 3 and/or of the topographical conformation of the working area 3 and/or of activities and/or missions to be assigned to the crawler vehicle 2 and/or of the position and/or conformation of reference elements in the working area 3.

At this point, the control unit 7 of the crawler vehicle 2 performs at least one of the following actions (block 45):
- sends information indicative of the processed operative data to the interface screen 10 so as to allow a display of said information on the interface screen 10 (block 46) ;
- controls the advancement of the crawler vehicle 2 in the working area 3 as a function of the processed operative data (block 47);
- controls the working tool assembly 6 as a function of the processed operative data (block 48).

In more detail, the control unit 7 determines an operating configuration of the tool assembly 6 as a function of the processed operative data, in particular as a function of the thickness T of the snowpack M and/or of the target surface S3, and controls the tool assembly 6 so that the tool assembly 6 assumes said determined operating configuration.

In particular, depending on the actions performed by the control unit 7, the crawler vehicle 2 can be used in one or more of the following operating modes: a first fully autonomous operating mode, in which the control unit 7 plans the optimal advancement path and controls the crawler vehicle 2 so that it follows said optimal advancement path or performs the tasks and/or missions assigned by the processing device 9; and a second partially assisted operating mode, in which the advancement of the crawler vehicle 2 is controlled by a driver assisted by the information indicative of the processed operative data displayed on the interface screen 10.

It is evident that variants can be made to the present invention without, however, departing from the scope of protection of the appended claims.

In particular, in accordance with a variant of the present invention not shown in the accompanying figures, instead of the crawler vehicle 2, the system 1 may comprise a vehicle without tracks.

## Claims

1. A system for managing operations of a crawler vehicle in a working area, the system (1) comprising:
- a crawler vehicle (2), which is configured to advance in the working area (3) and comprises a frame (4), a pair of motorized tracks (5), a working tool assembly (6), and a control unit (7);
- at least one detection device (8), which is configured to detect operative data indicative of a status of the working area (3) and is separate from the crawler vehicle (2); and
- a processing device (9), which is in communication with the control unit (7) of the crawler vehicle (2) and with the at least one detection device (8), and is configured to process the operative data detected by the at least one detection device (8) and to transmit said processed operative data to the control unit (7) of the crawler vehicle (2),
the control unit (7) of the crawler vehicle (2) being configured to perform at least one of the following actions:
- sending information indicative of the processed operative data to an interface screen (10) so as to allow a display of said information on the interface screen (10);
- controlling the advancement of the crawler vehicle (2) in the working area (3) as a function of the processed operative data;
- controlling the working tool assembly (6) as a function of the processed operative data.

2. The system as claimed in claim 1, wherein the detection device (8) comprises a lidar and/or a radar and/or an infrared camera and/or a stereoscopic camera and/or a camera and/or a video camera.

3. The system as claimed in claim 1 or 2, and comprising at least one recognition vehicle (11, 12, 13) of aerial and/or ground type, which is configured to advance in the working area (3) and is equipped with the at least one detection device (8).

4. The system as claimed in any one of the foregoing claims, and comprising at least one artificial satellite (14), which is configured to orbit around the planet Earth and is equipped with the at least one detection device (8).

5. The system as claimed in any one of the foregoing claims, wherein the at least one detection device (8) is arranged in a fixed location (15) in the working area (3) or at boundaries of the working area (3).

6. The system as claimed in any one of the foregoing claims, wherein the processing device (9) is arranged in a position remote from the crawler vehicle (2) and from the at least one detection device (8).

7. The system as claimed in any one of the foregoing claims, and comprising a plurality of crawler vehicles (2).

8. The system as claimed in any one of the foregoing claims, wherein the processing device (9) is configured to process the operative data detected by the at least one detection device (8) so as to determine in real time a status of at least a portion of the working area (3).

9. The system as claimed in any one of the foregoing claims, wherein the processing device (9) is configured to process the operative data detected by the at least one detection device (8) so as to determine a topographical conformation of the working area (3).

10. The system as claimed in any one of the preceding claims, wherein the processing device (9) is configured to process the operative data detected by the at least one detection device (8) so as to detect a position and/or a conformation of reference elements in the working area (3).

11. The system as claimed in any one of the foregoing claims, wherein the processing device (9) is configured to process in real time a sequence of digital images of the working area (3) as a function of the processed operative data.

12. The system as claimed in claim 10 or 11, wherein the processing device (9) comprises a memory (20) in which is stored a database containing comparison images of a plurality of reference elements of different types; the processing device (9) being configured to classify each reference element as a function of the processed operative data and of the comparison images stored in the database.

13. The system as claimed in any one of the foregoing claims, wherein the processing device (9) is configured to process the operative data detected by the at least one detection device (8) so as to define an area that can be travelled by the crawler vehicle (2) as a function of the processed operative data and preferably to plan an optimal forward path within the area that can be travelled by the crawler vehicle (2).

14. The system as claimed in any one of the foregoing claims, wherein the processing device (9) implements artificial intelligence algorithms.

15. The system as claimed in any one of the foregoing claims, wherein the crawler vehicle (2) comprises a cab (25) mounted on the frame (4) and a user interface (26), which is arranged in the cab (25) and is provided with an interface screen (10) configured to receive and display the information indicative of processed operative data.

16. A method for managing operations of a crawler vehicle in a working area (3), the method comprising the steps of:
- detecting operative data indicative of a status of the working area (3) by means of at least one detection device (8) separate from the crawler vehicle (2);
- processing the detected operative data; and
- performing at least one of the following actions:
- sending information indicative of the processed operative data to an interface screen (10) so as to allow a display of said information on the interface screen (10);
- controlling the advancement of the crawler vehicle (2) in the working area (3) as a function of the processed operative data;
- controlling a working tool assembly (6) of the crawler vehicle (2) as a function of the processed operative data.

17. The method as claimed in claim 16, and comprising the step of advancing in the working area (3) a recognition vehicle (11, 12, 13) of an aerial and/or ground type equipped with the at least one detection device (8).

18. The method as claimed in claim 16 or 17, and comprising the step of arranging the at least one detection device (8) aboard an artificial satellite (14) orbiting around the planet Earth.

19. The method as claimed in any one of claims 16 to 18, and comprising the step of arranging the at least one detection device (8) in a fixed location (15) in the working area (3) or at boundaries of the working area (3).

20. The method as claimed in any one of claims 16 to 19, and comprising the step of processing the operative data detected by the at least one detection device (8) so as to determine in real time a status of at least a portion of the working area (3) and/or a topographical conformation of the working area (3).

21. A computer program configured to manage operations of a crawler vehicle (2) in a working area (3) and directly loadable into a memory of a computer to carry out the method steps of any one of claims 16 to 20 when the program is implemented by the computer.

22. A program product comprising a readable medium on which the program of claim 21 is stored.
